# EUROPEAN PATENT APPLICATION

(11) **EP 4 075 225 A1**
(43) Date of publication of application: **19.10.2022**
(21) Application number: 20899497.0
(22) Date of filing: 10.12.2020
(51) Int. Cl.: G05D 1/02

(54) **WORKING MAP CONSTRUCTION METHOD AND APPARATUS, ROBOT, AND STORAGE MEDIUM**

(30) Priority: 13.12.2019 CN 201911289759
(71) Applicant: Positec Power Tools (Suzhou) Co., Ltd., Suzhou, Jiangsu 215123 (CN)
(72) Inventor: GAO, Zhendong, Suzhou, Jiangsu 215123 (CN); HE, Mingming, Suzhou, Jiangsu 215123 (CN); WANG, Hongming, Suzhou, Jiangsu 215123 (CN)
(74) Representative: Dentons UK and Middle East LLP
(86) International application number: PCT/CN2020/135199
(87) International publication number: WO 2021/115371

(57) **Abstract**

Embodiments of this specification provide a working map construction method and apparatus, a robot, and a storage medium. The method includes: determining a moving path of a robot when the robot moves forward as a first forward moving path; determining, after the robot moves backward, a position of the robot when the robot changes from moving backward to moving forward again as a correction position; determining an auxiliary position on the first forward moving path according to the correction position in a case that the correction position is not on the first forward moving path; and determining a correction path according to the correction position and the auxiliary position, so as to construct a working map of the robot according to the correction path and the first forward moving path. By using the working map construction method provided in the embodiments of this specification, a correction function in a process of constructing the working map is achieved, thereby improving efficiency of constructing the working map.

## Description

### Technical Field

The embodiments of this specification relate to the field of intelligent device technologies, and in particular, to a working map construction method and apparatus, a robot, and a storage medium.

### Background

With the development of science and technology, intelligent self-moving devices become popular. Self-moving devices can automatically perform preset related tasks through preset programs without human operation and intervention, and are therefore widely applied to industrial applications and household products. The intelligent self-moving devices can be applied to industry, such as robots executing various functions, and be applied to household products, such as lawn mowers, vacuum cleaners, sweeping robots, and the like. These intelligent self-moving devices greatly save people's time and bring great convenience to industrial production and home life.

Generally, industrial applications such as intelligent moving devices executing various functions, and applications in household products, such as intelligent moving devices including lawn mowers, vacuum cleaners, sweeping robots, and the like need to work within a certain range. Before these intelligent moving devices work, it is necessary to first delimit a working region. The intelligent devices can work in the working region and identify a boundary of the working region, so as to ensure a smooth progress of the work.

Currently, for the existing robots, such as automatic lawn mowers, it is necessary to bury a cable at a boundary as a boundary identifier recognizable for the lawn mowers, or to use GNSS signals to accurately navigate and construct working maps. However, in a process of constructing a working map, if it is found that a problem occurs on the map, it is impossible to immediately correct a position where the problem occurs, the position on the map where the problem occurs can only be determined in a subsequent map confirmation stage of constructing the working map, and the map is reconstructed. Such a correction operation on the working map is too cumbersome, resulting in low efficiency of constructing the map.

### SUMMARY

Embodiments of this specification aim to provide a working map construction method and apparatus, a robot, and a storage medium, so as to improve efficiency of constructing a working map of a robot.

In order to resolve the foregoing problem, the embodiments of this specification provide a working map construction method and apparatus, a robot, and a storage medium, which are implemented as follows:
A working map construction method is provided, including: determining a moving path of a robot when the robot moves forward as a first forward moving path; determining, after the robot moves backward, a position of the robot when the robot changes from moving backward to moving forward again as a correction position; determining an auxiliary position on the first forward moving path according to the correction position in a case that the correction position is not on the first forward moving path; and determining a correction path according to the correction position and the auxiliary position, so as to construct a working map of the robot according to the correction path and the first forward moving path.

A working map construction apparatus is provided, including: a first determination module, configured to determine a moving path of a robot when the robot moves forward as a first forward moving path; a second determination module, configured to determine, after the robot moves backward, a position of the robot when the robot changes from moving backward to moving forward again as a correction position; a third determination module, configured to determine an auxiliary position on the first forward moving path according to the correction position in a case that the correction position is not on the first forward moving path; and a first construction module, configured to determine a correction path according to the correction position and the auxiliary position, so as to construct a working map of the robot according to the correction path and the first forward moving path.

A robot is provided, where the foregoing working map construction apparatus is arranged in the robot.

A computer-readable storage medium is provided, where the computer-readable storage medium stores computer program instructions, and when the computer program instructions are executed, the following steps are implemented: determining a moving path of a robot when the robot moves forward as a first forward moving path; determining, after the robot moves backward, a position of the robot when the robot changes from moving backward to moving forward again as a correction position; determining an auxiliary position on the first forward moving path according to the correction position in a case that the correction position is not on the first forward moving path; and determining a correction path according to the correction position and the auxiliary position, so as to construct a working map of the robot according to the correction path and the first forward moving path.

As can be seen from the technical solutions provided in the foregoing embodiments of this specification, in the embodiments of this specification, a moving path of a robot when the robot moves forward is determined as a first forward moving path; after the robot moves backward, a position of the robot when the robot changes from moving backward to moving forward again is determined as a correction position; an auxiliary position is determined on the first forward moving path according to the correction position in a case that the correction position is not on the first forward moving path; and a correction path is determined according to the correction position and the auxiliary position, so as to construct a working map of the robot according to the correction path and the first forward moving path. By using the working map construction method provided in the embodiments of this specification, a correction function in a process of constructing the working map is achieved, to resolve a cumbersomeness problem that when it is found that a problem occurs on the map in the process of constructing the working map of the robot, a position on the map where the problem occurs can only be determined in a subsequent map confirmation stage of constructing the working map, and the map is reconstructed to complete the correction operation on the map, thereby improving efficiency of constructing the working map.

### BRIEF DESCRIPTION OF THE DRAWINGS

To describe the technical solutions in the embodiments of this specification or in the prior art more clearly, the following briefly introduces the accompanying drawings required for describing the embodiments or the prior art. Apparently, the accompanying drawings in the following descriptions show merely some embodiments of this specification, and a person of ordinary skill in the art may still derive other accompanying drawings from these accompanying drawings without creative efforts.
FIG. 1 is a flowchart of a working map construction method according to an embodiment of this specification;
FIG. 2 is a schematic diagram of boundary correction in a process of constructing a working map according to an embodiment of this specification;
FIG. 3 is a schematic diagram of boundary correction in a process of constructing a working map according to an embodiment of this specification;
FIG. 4 is a schematic diagram of boundary correction in a process of constructing a working map according to an embodiment of this specification; and
FIG. 5 is a diagram of functional modules of a working map construction apparatus according to an embodiment of this specification.

### DETAILED DESCRIPTION

The technical solutions in the embodiments of this specification will be described below with reference to the accompanying drawings in the embodiments of this specification. Obviously, the described embodiments are a part of this specification, but not all of them. Based on the embodiments of this specification, all other embodiments obtained by a person of ordinary skill in the art without creative efforts shall fall within the protection scope of this specification.

In the embodiments of this specification, a working map may be a working region of a robot, and the robot may work in a region where the working map is located, and can recognize a boundary of the region, thereby ensuring a smooth progress of working. Considering that if moving paths of the robot in different directions can be distinguished by determining a moving direction of the robot in a process of constructing the working map, it is possible to resolve a cumbersomeness problem that when it is found that a problem occurs on a map in the process of constructing the working map of the robot, a position on the map where the problem occurs can only be determined in a subsequent map confirmation stage of constructing the working map, and the map is reconstructed to complete the correction operation on the map, thereby improving efficiency of constructing the working map, the embodiments of this specification therefore provide a working map construction method.

In the embodiments of this specification, the robots may include robots with a moving function such as a sweeping robot, an automatic lawn mower, an automatic snow sweeper, a food delivery robot, and the like.

In the embodiments of this specification, the working map construction method may be applied to work of the robot, and the robot may work in a region where a constructed working map is located during working. Using the automatic lawn mower as an example, the automatic lawn mower can automatically mow and charge in a user's lawn without user's intervention. When the user uses the automatic lawn mower, as long as the user sends the working map to the automatic lawn mower in advance, the automatic lawn mower can work in a region where the working map is located.

In the embodiments of this specification, a construction process of the working map may be to make the robot move along a boundary of a region required by the user, and to use a moving path of the robot as a boundary of a working region to construct the working map. When the user starts constructing the working map, the user can send a working map construction instruction to the robot, for example, by pressing a button arranged on the robot, or by using a device connected to the robot. The robot can receive the working map construction instruction and respond to the working map construction instruction. After receiving the working map construction instruction, the robot can determine the moving path when the robot moves. In a process of constructing the working map, the user can push the robot to move, control the robot to move by remote control, or control the robot to move in any other manner. Using the automatic lawn mower as an example, when a user uses the automatic lawn mower, a working region of the automatic lawn mower needs to be delimited in advance, that is, a place where there is a lawn in a user's yard. The user can enable a working map construction function of the automatic lawn mower. In this case, the user can push the automatic lawn mower to move along a boundary of the lawn. The automatic lawn mower can record a moving path and construct a working map by using the moving path as the boundary. After the working map is constructed, the user puts the automatic lawn mower in a region where the working map is located, and the automatic lawn mower can automatically complete lawn mowing work in the working region.

In the embodiments of this specification, the working map construction method is applicable to different application scenarios. For example, the method is applicable to map construction of a boundary of the working region, that is, delimiting the working region of the robot to make the robot work in the working region. The method is also applicable to map construction of an obstacle boundary, that is, if there are obstacles such as a tree, a stone, and a pit in the working region, the obstacle can be delimited to make the robot bypass the obstacles during working. The method is also applicable to map construction of a channel boundary, for example, arranging a channel between two different working regions, so that the robot can work back and forth in the different working regions along the channel. The working map construction method is also applicable to other different application scenarios, and this is not limited in the embodiments of this specification.

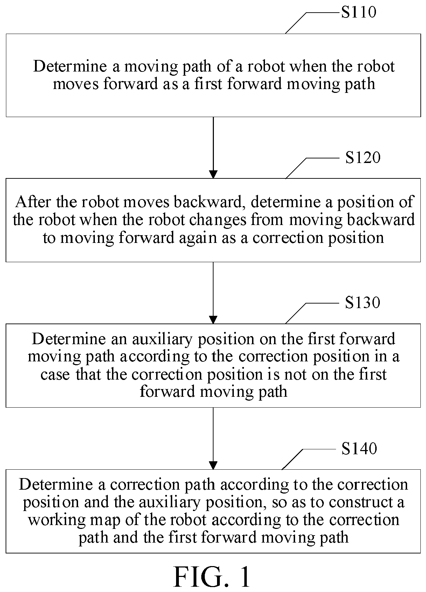

FIG. 1 is a flowchart of a working map construction method according to an embodiment of this specification. As shown in FIG. 1, the working map construction method may include the following steps.

S110. Determine a moving path of a robot when the robot moves forward as a first forward moving path.

In some embodiments, a moving direction of the robot may be determined according to a speed of the robot. Specifically, the moving direction of the robot is determined as moving forward when the speed of the robot is greater than a threshold; and the moving direction of the robot is determined as moving backward when the speed of the robot is less than the threshold.

In some embodiments, a function of the threshold may be to determine the relative magnitude of the speed of the robot, so that the moving direction of the robot can be determined according to the relative magnitude of the speed of the robot. The threshold may be 0. Certainly, the threshold may be other values. For example, considering a problem of accuracy, the threshold may be further a value near 0, such as a positive number greater than 0 and near 0, or a negative number less than 0 and near 0. Specifically, the threshold may be, for example, -0.2, -0.1, 0.2, or the like. When the speed of the robot is greater than the threshold, the moving direction of the robot can be determined as moving forward, that is, when constructing the working map is started, the user controls an initial moving direction of the robot. The moving direction of the robot may be determined as moving backward when the speed of the robot is less than the threshold. For example, some problems occur in a process of map construction. For example, the user finds an obstacle or a moving route deviates from a predetermined path. If the robot continues to move forward, the obstacle may be delimited in the working map or a region unnecessary for the user may also be delimited in the working map. In this case, the user can control the robot to move backward by a certain distance, and then move forward to avoid the obstacle and reduce the unnecessary working region.

In some embodiments, an odometer and an inertial measurement unit (IMU) may be arranged in the robot. The speed of the robot can be calculated in real time by the odometer and the IMU. The odometer is a method for estimating a position of an object that changes with time by using data obtained from a motion sensor. This method may be used in various kinds of robot systems (wheeled or legged) to estimate distances by which these robots move relative to an initial position. The IMU is an apparatus configured to measure a three-axis attitude angle (or an angular rate) and an acceleration of an object. The IMU may include accelerometers and gyros of three single axes. The accelerometer detects an acceleration signal of an object in three independent axes in a coordinate system of a carrier, and the gyro detects a signal of an angular velocity, relative to a navigation coordinate system, of a carrier, so as to measure an angular velocity and acceleration of the object in a three-dimensional space, thereby obtaining an attitude of the object by calculation according to this. The speed of the robot can be calculated in real time according to the distance by which the robot moves relative to the initial position measured by the odometer and the acceleration measured by the IMU.

In some embodiments, when the moving direction of the robot changes, a working state of a power apparatus of the robot also changes. Therefore, the moving direction of the robot may be further determined according to the working state of the power apparatus of the robot. The power apparatus may include a hydraulic drive, a pneumatic drive, a motor, and the like. When the power apparatus of the robot is the motor, in a process that the moving direction of the robot changes, a running direction of the motor also changes, and in this case, a reverse electromotive force is generated, causing a current to be changed. Therefore, the moving direction of the robot can be determined according to the change of the current. Certainly, the moving direction of the robot may be further determined in any other manner, and this is not limited in the embodiments of this specification.

In some embodiments, in a moving process of the robot, positions of the robot at different moments can be determined according to a positioning system, the positions of the robot at the different moments can be connected, and a connecting line can be used as the moving path of the robot. The positioning system may include GPS, BeiDou Navigation Satellite System, Galileo satellite navigation system, Russian global navigation satellite system, and the like. Certainly, the positioning system may further include a positioning system established according to positioning methods such as a base station, Wi-Fi, Bluetooth, and the like. The positioning system may be further any other system having a positioning function, and this is not limited in this specification. In some embodiments, a moving path of a robot when the robot moves forward may be determined as a first forward moving path.

S 120. After the robot moves backward, determine a position of the robot when the robot changes from moving backward to moving forward again as a correction position.

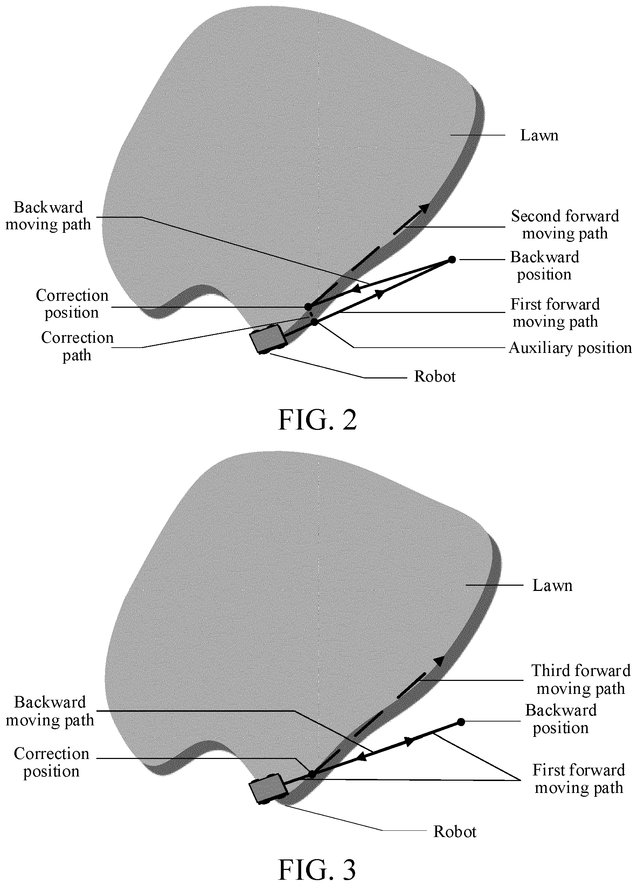

Specifically, in a process that the user controls the robot to move forward, some problems occur. As shown in FIG. 2 to FIG. 4, the user finds that the moving path of the robot has deviated from a predetermined route. In this case, the user can control the robot to move backward by a certain distance, and then move forward to correct the moving path, so that the robot moves according to the predetermined route again. After the robot moves backward, a position of the robot when the robot changes from moving backward to moving forward again may be determined as a correction position.

In some embodiments, using that the moving direction of the robot is determined according to the speed of the robot as an example, when the speed of the robot decreases from a value greater than the threshold to the threshold, and then from the threshold to a value less than the threshold, it can be determined that the moving direction of the robot changes from moving forward to moving backward. If the speed of the robot changes from the value less than the threshold to the threshold again, and then from the threshold to the value greater than the threshold, it can be determined that the robot moves backward by a certain distance and then moves forward again to perform a normal map construction process.

In some embodiments, a position of the robot when the moving direction of the robot changes from moving forward to moving backward is recorded as a backward position.

S130. Determine an auxiliary position on the first forward moving path according to the correction position in a case that the correction position is not on the first forward moving path.

In some embodiments, when the robot moves backward, the moving path of the robot may be further recorded as a backward moving path.

In some embodiments, the correction position may be located on the backward moving path instead of the first forward moving path. Specifically, as shown in FIG. 2, FIG. 2 shows a case that the correction position is not located on the first forward moving path. When the user controls the robot to move backward, the robot does not return along an original forward moving path, and a position of the robot when the user controls the robot to change from moving backward to moving forward is not on the original forward moving path. In this case, the backward moving path does not coincide with a first forward moving path, and the correction position is located on the backward moving path instead of the first forward moving path.

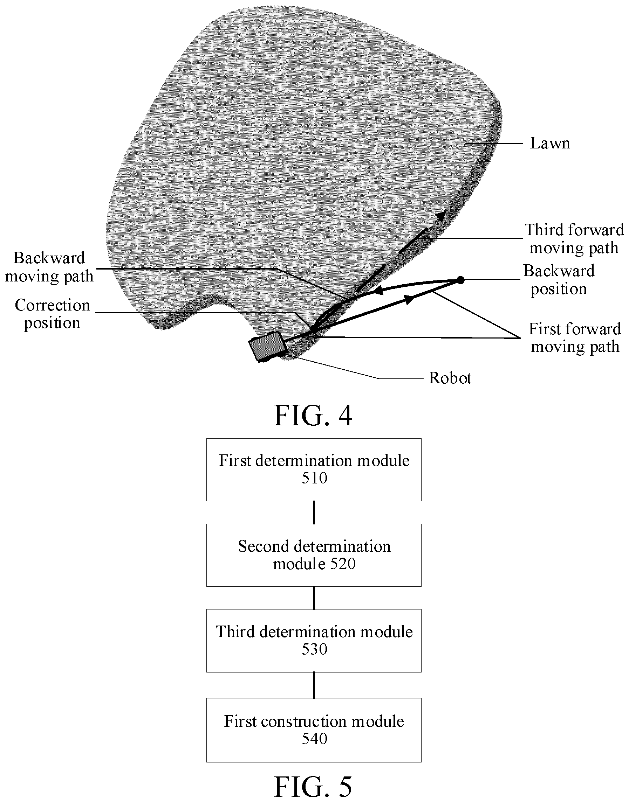

In some embodiments, the correction position can alternatively be located on both the backward moving path and the first forward moving path. Specifically, FIG. 3 and FIG. 4 show a case that the correction position is located on both the backward moving path and the first forward moving path. As shown in FIG. 3, when the user controls the robot to move backward, the robot returns along the original forward moving path, and the position of the robot when the user controls the robot to change from moving backward to moving forward is located on both the backward moving path and the first forward moving path. In this case, the backward moving path coincides with the first forward moving path, and the correction position is located on both the backward moving path and the first forward moving path. As shown in FIG. 4, when the user controls the robot to move backward, the robot does not return along the original forward moving path, but in a process of moving backward, the robot passes through a certain position of the original forward moving path, and just at this position, the robot changes from moving backward to moving forward. In this case, although the backward moving path does not coincide with the first forward moving path, the correction position is located on both the backward moving path and the first forward moving path.

In some embodiments, as shown in FIG. 2, in a case that the correction position is not on the first forward moving path, the robot does not return along the original forward moving path in the process that the user controls the robot to move backward. After the robot moves backward to the correction position, it is further necessary to determine a position of the correction position relative to the original forward moving path, so as to make a distance from the position to the original forward moving path as short as possible, thereby completing repairing the working map. Specifically, after the correction position is determined, a position on the first forward moving path at a shortest straight-line distance to the correction position can be determined, and the position can be used as the auxiliary position. Certainly, another position on the first forward moving path, for example, a position near the position on the first forward moving path at a shortest straight-line distance to the correction position may alternatively be used as the auxiliary position.

In some embodiments, as shown in FIG. 3 and FIG. 4, in a case that the correction position is on the first forward moving path, a moving path of the robot when the robot changes from moving backward to moving forward again is determined as a third forward moving path, so as to construct a working map of the robot according to the third forward moving path and the first forward moving path. Specifically, after the user controls the robot to move backward to a correction position where the problem can be avoided, the user may further re-control the robot to move forward and continue to construct the working map. In this case, a moving path of the robot when the robot changes from moving backward to moving forward again can be determined as a third forward moving path, so as to construct the working map of the robot according to the third forward moving path and the first forward moving path. In some embodiments, in a case that the correction position is on the first forward moving path, a moving path between the backward position and the correction position can be deleted, so as to construct the working map of the robot according to the third forward moving path and the first forward moving path on which the moving path between the backward position and the correction position is deleted. Specifically, the third forward moving path and the first forward moving path on which the moving path between the backward position and the correction position is deleted can be used as a boundary of a working region to construct the working map.

S 140. Determine a correction path according to the correction position and the auxiliary position, so as to construct a working map of the robot according to the correction path and the first forward moving path.

In some embodiments, the correction position and the auxiliary position can be connected by a straight line, and a connecting line between the correction position and the auxiliary position is used as a correction path. The correction position and the auxiliary position can alternatively be connected by a curve with a preset curvature, and a connecting line between the correction position and the auxiliary position is used as a correction path.

In some embodiments, the moving path between the auxiliary position and the correction position may be deleted, where the moving path between the auxiliary position and the correction position includes a forward moving path between the auxiliary position and the backward position, and a backward moving path between the backward position and the correction position. Correspondingly, the correction path and the first moving path on which the moving path between the auxiliary position and the backward position is deleted can be used as the boundary of the working region to construct the working map.

In some embodiments, the user can control the robot to end moving backward and start moving forward again after determining that a distance by which the robot moves backward is enough to avoid the problem. In this case, a moving path of the robot when the robot changes from moving backward to moving forward again may be determined as a second forward moving path, so as to construct the working map of the robot according to the second forward moving path, the correction path, and the first forward moving path. Specifically, the correction path, the first moving path on which the moving path between the backward position and the auxiliary position is deleted, and the second forward moving path can be used as the boundary of the working region to construct the working map.

In the embodiments of this specification, the moving path of the robot when the robot moves forward may be determined as the first forward moving path. After the robot moves backward, a position of the robot when the robot changes from moving backward to moving forward again is determined as the correction position. The auxiliary position is determined on the first forward moving path according to the correction position in a case that the correction position is not on the first forward moving path. The correction path is determined according to the correction position and the auxiliary position, so as to construct the working map of the robot according to the correction path and the first forward moving path. By using the working map construction method provided in the embodiments of this specification, a correction function in a process of constructing the working map is achieved, to resolve a cumbersomeness problem that a correction operation on the working map is performed during path confirmation in a process of constructing the working map of the robot, thereby improving efficiency of constructing the working map.

In an interactive scenario, the automatic lawn mower is used as an example. In a case that the user uses the automatic lawn mower to mow a lawn in a yard for the first time, first, the user needs to delimit a place with the lawn in the yard as the working region of the automatic lawn mower, that is, to construct the working map for the automatic lawn mower. In a process of constructing the working map, the user can push or drag the automatic lawn mower to move, control the automatic lawn mower to move by remote control, or control the automatic lawn mower to move in any other manner.

In this interactive scenario, for example, the user pushes or drags the automatic lawn mower to control the automatic lawn mower to move. The user can issue a working map construction instruction by pressing a button arranged on the automatic lawn mower, and push the automatic lawn mower to move along the boundary of the lawn. The automatic lawn mower can receive the working map construction instruction and respond to the working map construction instruction. After receiving the working map construction instruction, the automatic lawn mower can determine the moving path, and after the automatic lawn mower moves along the lawn, the working map can be constructed according to the determined moving path.

In this interactive scenario, in a process that the user pushes the automatic lawn mower to move along the boundary of the lawn, if the user is distracted or encounters some other problems to cause a moving route of the automatic lawn mower to deviate from the boundary of the lawn, the user can drag the automatic lawn mower to move backward by a certain distance, and then move forward to make the automatic lawn mower move along the boundary again until a circle along the boundary of the lawn is completed.

In this interactive scenario, the automatic lawn mower can calculate a moving speed through the odometer and the IMU. When the moving speed is greater than zero, it can be determined that the automatic lawn mower is moving forward, and a moving path when the moving speed is greater than zero is recorded as a forward moving path. When the moving speed is less than zero, it can be determined that the automatic lawn mower is moving backward, and a moving path when the moving speed is less than zero is recorded as a backward moving path.

In this interactive scenario, after the automatic lawn mower moves backward, a position of the automatic lawn mower when the automatic lawn mower changes from moving backward to moving forward again may be determined as a correction position.

In this interactive scenario, when determining that the correction position is not on the original forward moving path, the automatic lawn mower can further determine a position on the original forward moving path at a shortest straight-line distance to the correction position, and record the position as an auxiliary position. Further, after determining the auxiliary position, the automatic lawn mower can delete the moving path between the correction position and the auxiliary position, then connect the correction position and the auxiliary position through a straight line, use the connecting line between the correction position and the auxiliary position as the correction path, and replace the original moving path between the correction position and the auxiliary position with the correction path to construct the working map. Still further, after determining that a distance by which the automatic lawn mower moves backward is enough to avoid the problem, the user can make the automatic lawn mower stop moving backward and move forward again, determine a forward moving path when the automatic lawn mower moves forward again, and use the original moving path on which the moving path between the backward position and the auxiliary position is deleted, the correction path, and the forward moving path when the automatic lawn mower moves forward again as the boundary of the working region to construct the working map.

In this interactive scenario, when the correction position is determined to be on the original forward moving path, the position when the automatic lawn mower changes from moving forward to moving backward can be determined as the backward position. Further, after the backward position is determined, the moving path between the backward position and the correction position can be deleted, that is, the forward moving path and the backward moving path between the backward position and the correction position are deleted. Still further, after determining that a distance by which the automatic lawn mower moves backward is enough to avoid the problem, the user can make the automatic lawn mower stop moving backward and move forward again, determine a forward moving path when the automatic lawn mower moves forward again, and use the original moving path on which the moving path between the backward position and the auxiliary position is deleted and the forward moving path when the automatic lawn mower moves forward again as the boundary of the working region to construct the working map.

By using the working map construction method provided in this interactive scenario, the moving path of the automatic lawn mower can be determined, and the moving path when the automatic lawn mower moves forward is recorded as the forward moving path. After the automatic lawn mower moves backward, a position of the automatic lawn mower when the automatic lawn mower changes from moving backward to moving forward again may be determined as the correction position. The auxiliary position is determined on the forward moving path according to the correction position in a case that the correction position is not on the forward moving path. The correction path is determined according to the correction position and the auxiliary position, so as to construct the working map of the robot according to the correction path and the forward moving path. In a case that the correction position is on the forward moving path, a forward moving path of the automatic lawn mower when the automatic lawn mower changes from moving backward to moving forward again is determined, so as to construct the working map of the robot according to the forward moving path and the forward moving path when the automatic lawn mower changes to moving forward again. By using the working map construction method provided in this interactive scenario, a correction function in a process of constructing the working map is achieved, to resolve a cumbersomeness problem that a correction operation on the working map is performed during path confirmation in a process of constructing the working map of the automatic lawn mower, thereby improving efficiency of constructing the working map.

The embodiments of this specification further provide a computer-readable storage medium for a working map construction method, where the computer-readable storage medium stores computer program instructions, and when the computer program instructions are executed, the following steps are implemented: determining a moving path of a robot when the robot moves forward as a first forward moving path; determining, after the robot moves backward, a position of the robot when the robot changes from moving backward to moving forward again as the correction position; determining the auxiliary position on the first forward moving path according to the correction position in a case that the correction position is not on the first forward moving path; and determining the correction path according to the correction position and the auxiliary position, so as to construct the working map of the robot according to the correction path and the first forward moving path.

In this implementation, the storage medium includes but is not limited to a random access memory (RAM), a read-only memory (ROM), a cache, a hard disk drive (HDD), or a memory card. The memory may be configured to store the computer program instructions. In this implementation, functions and effects specifically achieved by the program instructions stored in the computer-readable storage medium can be explained in comparison with other implementations, and details are not described herein.

Referring to FIG. 5, at a software level, the embodiments of this specification further provide a working map construction apparatus. The apparatus can specifically include the following structural modules:
a first determination module 510, configured to determine a moving path of a robot when the robot moves forward as a first forward moving path;
a second determination module 520, configured to determine, after the robot moves backward, a position of the robot when the robot changes from moving backward to moving forward again as a correction position;
a third determination module 530, configured to determine an auxiliary position on the first forward moving path according to the correction position in a case that the correction position is not on the first forward moving path; and
a first construction module 540, configured to determine a correction path according to the correction position and the auxiliary position, so as to construct a working map of the robot according to the correction path and the first forward moving path.

In some embodiments, the apparatus may further include: a first deletion module, configured to determine a position of the robot when the robot changes from moving forward to moving backward as a backward position, and delete a moving path between the backward position and the auxiliary position.

In some embodiments, the apparatus may further include: a second construction module, configured to determine a moving path of the robot when the robot changes from moving backward to moving forward again as a second forward moving path, so as to construct a working map of the robot according to the second forward moving path, the correction path, and the first forward moving path.

In some embodiments, the apparatus may further include: a third construction module, configured to determine, in a case that the correction position is on the first forward moving path, a moving path of the robot when the robot changes from moving backward to moving forward again as a third forward moving path, so as to construct a working map of the robot according to the third forward moving path and the first forward moving path.

In some embodiments, the apparatus may further include: a second deletion module, configured to delete a moving path between the backward position and the correction position.

In some embodiments, the apparatus may further include: a third recording module, configured to determine a moving path of the robot when the robot moves backward as a backward moving path, where the correction position is located on the backward moving path.

In some embodiments, the apparatus may further include: a third deletion module, configured to delete the backward moving path after the correction position is determined.

The embodiments of this application further provide a robot, and any one of the foregoing working map construction apparatuses is arranged in the robot.

It should be noted that, the embodiments of this specification are all described in a progressive manner, for same or similar parts in the embodiments, refer to such embodiments, and descriptions of each embodiment focus on a difference from other embodiments. Especially, apparatus and device embodiments are basically similar to a method embodiment, and therefore are described briefly. For related parts, refer to partial descriptions in the method embodiment.

After reading this specification, those skilled in the art can conceive of any combination of some or all of the embodiments listed in this specification without creative efforts, and these combinations also fall within the scope of disclosure and protection of this specification.

In the 1990s, improvements of a technology can be clearly distinguished between hardware improvements (for example, improvements to a circuit structure such as a diode, a transistor, or a switch) and software improvements (improvements to a method procedure). However, with the development of technology, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (PLD) such as a field programmable gate array (FPGA) is a type of integrated circuit whose logic function is determined by a user by programming the device. The designers perform voluntary programming to "integrate" a digital system into a single PLD without requiring a chip manufacturer to design and prepare a dedicated integrated circuit chip. Moreover, nowadays, instead of manually making integrated circuit chips, this programming is mostly implemented by using "logic compiler" software, which is similar to the software compiler used in program development and writing. The original code is written in a specific programming language before compiling, and this language is referred to as a hardware description language (HDL). There are various kinds of HDLs, for example, advanced Boolean expression language (ABEL), altera hardware description language (AHDL), Confluence, Cornell university programming language (CUPL), HDCal, Java hardware description language (JHDL), Lava, Lola, MyHDL, PALASM, Ruby hardware description language (RHDL), and the like. Currently, the most commonly used HDLs are very-high-speed integrated circuit hardware description language (VHDL) and Verilog2. A person skilled in the art should also understand that provided that a method procedure is logically programmed and then programmed to an integrated circuit by using the foregoing hardware description languages, a hardware circuit that implements the logical method procedure can be easily obtained.

The system, the apparatus, the module or the unit described in the foregoing embodiments may be implemented by a computer chip or an entity, or implemented by a product having a certain function. A typical implementation device is a computer. Specifically, the computer may be, for example, a personal computer, a laptop computer, a cellular phone, a camera phone, a smartphone, a personal digital assistant, a media player, a navigation device, an email device, a game console, a tablet computer, a wearable device, or a combination of any of these devices.

It may be learned from description of the foregoing implementations that, a person skilled in the art may clearly understand that this specification may be implemented by using software and a necessary universal hardware platform. Based on such an understanding, the technical solutions in this specification essentially or the part contributing to existing technologies may be implemented in the form of a software product. The computer software product may be stored in a storage medium, such as a ROM/RAM, a magnetic disk, or an optical disc, and includes several instructions for instructing a computer device (which may be a personal computer, a server, a network device, or the like) to perform the methods described in the embodiments or parts of this specification.

The embodiments of this specification are all described in a progressive manner, for same or similar parts in the embodiments, refer to such embodiments, and descriptions of each embodiment focus on a difference from other embodiments. Especially, a system embodiment is basically similar to a method embodiment, and therefore is described briefly; for related parts, reference may be made to partial descriptions in the method embodiment.

This specification is applicable to environments or configurations of multiple universal or dedicated computer systems. For example, a personal computer, a server computer, a handheld device or a portable device, a flat panel device, a multi-processor system, a microprocessor-based system, a set-top box, a network PC, a minicomputer, a mainframe computer, and a distributed computing environment including any one of the foregoing system or device.

This specification can be described in the general context of computer-executable instructions executed by a computer, for example, program modules. Generally, the program module includes a routine, a program, an object, a component, a data structure, and the like for executing a particular task or implementing a particular abstract data type. This specification may also be implemented in a distributed computing environment in which tasks are performed by remote processing devices connected by using a communication network. In a distributed computing environment, the program module may be located in both local and remote computer storage media including storage devices.

Although this specification has been described by the embodiments, those of ordinary skill in the art know that this specification is subject to many modifications and changes without departing from the spirit of this specification, and it is intended that the appended claims include such modifications and changes without departing from the spirit of this specification.

## Claims

1. A working map construction method, comprising:
determining a moving path of a robot when the robot moves forward as a first forward moving path;
determining, after the robot moves backward, a position of the robot when the robot changes from moving backward to moving forward again as a correction position;
determining an auxiliary position on the first forward moving path according to the correction position in a case that the correction position is not on the first forward moving path;
determining a position of the robot when the robot changes from moving forward to moving backward as a backward position, and deleting a moving path between the backward position and the auxiliary position;
connecting the correction position and the auxiliary position through a straight line, and using a connecting line between the correction position and the auxiliary position as a correction path; and
determining a moving path of the robot when the robot changes from moving backward to moving forward again as a second forward moving path, so as to construct a working map of the robot according to the second forward moving path, the correction path, and the first forward moving path.

2. A working map construction method, wherein comprising:
determining a moving path of a robot when the robot moves forward as a first forward moving path;
determining, after the robot moves backward, a position of the robot when the robot changes from moving backward to moving forward again as a correction position;
determining an auxiliary position on the first forward moving path according to the correction position in a case that the correction position is not on the first forward moving path; and
determining a correction path according to the correction position and the auxiliary position, so as to construct a working map of the robot according to the correction path and the first forward moving path.

3. The method according to claim 2, wherein a moving direction of the robot is determined according to a speed of the robot;
the moving direction of the robot is determined as moving forward when the speed of the robot is greater than a threshold; and
the moving direction of the robot is determined as moving backward when the speed of the robot is less than the threshold.

4. The method according to claim 3, wherein the threshold is zero.

5. The method according to claim 2, wherein the auxiliary position is a position on the first forward moving path at a shortest straight-line distance to the correction position.

6. The method according to claim 2, wherein further comprising: determining a position of the robot when the robot changes from moving forward to moving backward as a backward position, and deleting a moving path between the backward position and the auxiliary position.

7. The method according to claim 2, wherein the determining a correction path according to the correction position and the auxiliary position comprises: connecting the correction position and the auxiliary position through a straight line; and using a connecting line between the correction position and the auxiliary position as a correction path.

8. The method according to claim 2, wherein further comprising: determining a moving path of the robot when the robot changes from moving backward to moving forward again as a second forward moving path, so as to construct a working map of the robot according to the second forward moving path, the correction path, and the first forward moving path.

9. The method according to claim 2, wherein in a case that the correction position is on the first forward moving path, a moving path of the robot when the robot changes from moving backward to moving forward again is determined as a third forward moving path, so as to construct a working map of the robot according to the third forward moving path and the first forward moving path.

10. The method according to claim 6, wherein further comprising: deleting a moving path between the backward position and the correction position.

11. The method according to any one of claims 2 to 10, further comprising: determining a moving path of the robot when the robot moves backward as a backward moving path, wherein the correction position is located on the backward moving path.

12. The method according to claim 11, wherein further comprising: deleting the backward moving path after the correction position is determined.

13. A working map construction apparatus, wherein comprising:
a first determination module, configured to determine a moving path of a robot when the robot moves forward as a first forward moving path;
a second determination module, configured to determine, after the robot moves backward, a position of the robot when the robot changes from moving backward to moving forward again as a correction position;
a third determination module, configured to determine an auxiliary position on the first forward moving path according to the correction position in a case that the correction position is not on the first forward moving path; and
a first construction module, configured to determine a correction path according to the correction position and the auxiliary position, so as to construct a working map of the robot according to the correction path and the first forward moving path.

14. The apparatus according to claim 13, wherein further comprising:
a first deletion module, configured to determine a position of the robot when the robot changes from moving forward to moving backward as a backward position, and delete a moving path between the backward position and the auxiliary position.

15. The apparatus according to claim 13, wherein further comprising:
a second construction module, configured to determine a moving path of the robot when the robot changes from moving backward to moving forward again as a second forward moving path, so as to construct a working map of the robot according to the second forward moving path, the correction path, and the first forward moving path.

16. The apparatus according to claim 13, wherein further comprising:
a third construction module, configured to determine, in a case that the correction position is on the first forward moving path, a moving path of the robot when the robot changes from moving backward to moving forward again as a third forward moving path, so as to construct a working map of the robot according to the third forward moving path and the first forward moving path.

17. The apparatus according to claim 14, wherein further comprising:
a second deletion module, configured to delete a moving path between the backward position and the correction position.

18. The apparatus according to any one of claims 13 to 17, wherein further comprising:
a third recording module, configured to determine a moving path of the robot when the robot moves backward as a backward moving path, wherein the correction position is located on the backward moving path.

19. The apparatus according to claim 18, wherein further comprising:
a third deletion module, configured to delete the backward moving path after the correction position is determined.

20. A robot, wherein the apparatus according to any one of claims 13 to 19 is arranged in the robot.

21. A computer-readable storage medium, wherein the computer-readable storage medium stores computer program instructions, and when the computer program instructions are executed, the following steps are implemented: determining a moving path of a robot when the robot moves forward as a first forward moving path; determining, after the robot moves backward, a position of the robot when the robot changes from moving backward to moving forward again as a correction position; determining an auxiliary position on the first forward moving path according to the correction position in a case that the correction position is not on the first forward moving path; and determining a correction path according to the correction position and the auxiliary position, so as to construct a working map of the robot according to the correction path and the first forward moving path.
